# EUROPÄISCHE PATENTANMELDUNG

(11) **EP 2 596 993 A2**
(43) Veröffentlichungstag der Anmeldung: **29.05.2013**
(21) Anmeldenummer: 12007393.7
(22) Anmeldetag: 27.10.2012
(51) Int. Cl.: B60Q 1/38

(54) **Kraftwagen-Blinkleuchte und Verfahren zum Betreiben einer Blinkleuchte**

(30) Priorität: 23.11.2011 DE 102011119230
(71) Anmelder: AUDI AG, 85045 Ingolstadt (DE)
(72) Erfinder: Stadler, Manfred, DE - 86633 Neuburg (DE); Schwarz, Torsten, DE - 85080 Gaimersheim (DE); Lendle, Reiner, DE - 74855 Haßmersheim (DE); Hummel, Benjamin, DE - 74219 Möckmühl (DE)
(74) Vertreter: Thielmann, Frank

(57) **Zusammenfassung**

Bei Kraftwagen-Blinkleuchten kann vorgesehen sein, die anzuzeigende Fahrtrichtung durch einen Lauflichteffekt zu betonen. Das Anzeigen eines Fahrtrichtungswechsels mittels eines Lauflichts ist jedoch nicht in allen Ländern zulässig. Es ist Aufgabe der vorliegenden Erfindung, bei einem Kraftwagen eine Anzeige eines Fahrtrichtungswechsels zu verbessern. Erfindungsgemäß wird dazu eine LED-Blinkleuchte (10) betrieben, indem in einem Blinkzyklus ausgehend von einem ausgeschalteten Zustand aller LED-Gruppen (24 bis 32) der Blinkleuchte zunächst eine Anfangsgruppe (24) eingeschaltet wird, danach ausgehend von der Anfangsgruppe (24) der Reihe nach die übrigen LED-Gruppen (26 bis 32) nacheinander hinzugeschaltet werden, bis sämtliche LED-Gruppen (24 bis 32) eingeschaltet sind, anschließend sämtliche LED-Gruppen (24 bis 32) für eine vorgegebene Zeitdauer im eingeschalteten Zustand gehalten und schließlich wieder alle LED-Gruppen (24 bis 32) ausgeschaltet werden. Hierbei liegt eine Zeitdauer vom Aktivieren der Anfangsgruppe (24) bis zum Erreichen des aktiven Zustands aller LED-Gruppen (24 bis 32) in einem Bereich von 100 ms bis 200 ms.

## Beschreibung

Die Erfindung betrifft eine Kraftwagen - Blinkleuchte mit einer Mehrzahl von in einer Reihe angeordneten Leuchtdioden (LED - Light emitting diode). Zu der Erfindung gehört auch ein Verfahren zum Betreiben einer Blinkleuchte, bei welcher mehrere jeweils wenigstens eine Leuchtdiode umfassende LED-Gruppen in einer Reihe angeordnet sind. Blinkleuchten der genannten Art sind beispielsweise aus der DE 101 30 259 A1 und der US 2009/0051523 A1 bekannt.

Blinkleuchten, oder kurz Blinker, werden in Kraftwagen als Fahrtrichtungsanzeiger bereitgestellt. Sie werden innerhalb eines Blinkzyklus abwechselnd an- und wieder ausgeschaltet, d. h. jeder Blinkzyklus besteht aus einer aktiven Periode, während welcher die Blinkleuchte leuchtet, und einer inaktiven Periode, während welcher die Blinkleuchte dunkel bleibt. Die Blinkfrequenz beträgt dabei zwischen einem und zwei Hertz. Für im Straßenverkehr zugelassene Blinkleuchten müssen dabei bestimmte gesetzliche Rahmenbedingungen erfüllt sein. So müssen bei einem Kraftwagen alle Blinker, durch welche ein bestimmter Fahrtrichtungswechsel angezeigt wird, in gleicher Phase leuchtend sichtbar sein, d. h. es müssen sich die aktiven Perioden der unterschiedlichen Blinkleuchten zeitlich überschneiden. Allerdings ist es technisch nicht möglich, sämtliche Blinkleuchten zu exakt derselben Zeit aufleuchten zu lassen. So benötigt beispielsweise eine Glühbirne, wenn sie als Leuchtmittel in einer Blinkleuchte verwendet wird, zwischen 150 ms und 200 ms, um nach dem Einschalten ihre volle Leuchtstärke zu erreichen. Genauso benötigt eine Glühbirne ca. 100 ms um nach dem Abschalten vollständig dunkel zu werden.

Die in den beiden bereits erwähnten Druckschriften beschriebenen Blinkleuchten betonen die anzuzeigende Fahrtrichtung dadurch, dass in einer jeweiligen Blinkleuchte eine Reihe von Leuchtmitteln nacheinander eingeschaltet wird, sodass ein Lauflichteffekt oder Animationseffekt innerhalb der Blinkleuchte entsteht. Die Richtung, in welcher sich das Lauflicht innerhalb einer Blinkleuchte bewegt, veranschaulicht dem Betrachter dann zusätzlich den bevorstehenden Fahrtrichtungswechsel.

Das Anzeigen eines Fahrtrichtungswechsels mittels eines Lauflichts ist jedoch nicht in allen Ländern gesetzlich zugelassen. So ergibt sich beispielsweise aus den ECE-Regelungen (ECE - Economic Commission for Europe), dass bei einer Blinkleuchte der während der Fahrtrichtungsanzeige blinkende Bereich bezüglich des Fahrzeugs ortsfest sein muss. Mit anderen Worten darf der beleuchtete Bereich beim Blinken nicht durch einen Lauflichteffekt in der Blinkleuchte von einer Seite auf die andere wandern.

Es ist Aufgabe der vorliegenden Erfindung, bei einem Kraftwagen eine Anzeige eines Fahrtrichtungswechsels zu verbessern und hierbei die beschriebenen Normen einzuhalten.

Die Aufgabe wird durch ein Verfahren gemäß Patentanspruch 1 und auch durch eine Blinkleuchte für einen Kraftwagen gemäß Patentanspruch 7 gelöst. Vorteilhafte Weiterbildungen des erfindungsgemäßen Verfahrens und der erfindungsgemäßen Blinkleuchte sind durch die Unteransprüche gegeben.

Mittels des erfindungsgemäßen Verfahrens wird eine Blinkleuchte betrieben, bei welcher eine Mehrzahl von jeweils wenigstens eine Leuchtdiode umfassenden LED-Gruppen in einer Reihe angeordnet ist. Für eine Fahrtrichtungsanzeige wird innerhalb jedes Blinkzyklus ausgehend von einem ausgeschalteten Zustand aller LED-Gruppen zunächst eine Anfangsgruppe eingeschaltet. Sind bei der Blinkleuchte beispielsweise fünfunddreißig Leuchtdioden in einer Reihe angeordnet, so ist denkbar, zunächst zehn oder zwölf benachbarte Leuchtdioden als Anfangsgruppe einzuschalten. Danach werden ausgehend von der Anfangsgruppe der Reihe nach die übrigen LED-Gruppen nacheinander hinzugeschaltet, bis sämtliche LED-Gruppen eingeschaltet sind. Die übrigen LED-Gruppen können dabei jeweils aus drei benachbarten Leuchtdioden der Reihe bestehen. Anschließend werden sämtliche LED-Gruppen für eine vorgegebene Zeitdauer in dem eingeschalteten Zustand gehalten. Dann werden alle LED-Gruppen wieder ausgeschaltet. Bei dem erfindungsgemäßen Verfahren liegt die Zeitdauer vom Aktivieren der Anfangsgruppe bis zum Erreichen des aktiven Zustands aller LED-Gruppen in einem Bereich von 100 ms bis 200 ms, insbesondere in einem Bereich von 140 ms bis 160 ms.

Das erfindungsgemäße Verfahren weist den Vorteil auf, dass sich auf seiner Grundlage an einem Kraftwagen ein im Sinne der gesetzlichen Norm ortsfester, blinkender Leuchtbereich erzeugen lässt. Dennoch wird für einen Betrachter bei jedem Einschalten der Reihe der LED-Gruppen der Eindruck eines zu wenigstens einer Richtung hin kontinuierlich breiter werdenden Leuchtbereichs erzeugt. Dieser Animationseffekt, der sich durch das Nacheinander-Einschalten der LED-Gruppen ergibt, dauert zwischen 100 ms und 200 ms. Er dauert somit nicht länger als eine Glühbirne braucht, um nach dem Einschalten ihre volle Helligkeit zu erlangen. Damit wird die Blinkleuchte im Rahmen der gesetzlichen Norm betrieben. Die Erfindung beruht auf der Erkenntnis, dass bei einem menschlichen Betrachter ein fließender Bewegungseindruck entsteht, wenn eine Reihe von LED-Gruppen nacheinander eingeschaltet wird und hierbei zwei aufeinanderfolgende LED-Gruppen mit einem Zeitversatz eingeschaltet werden, der kleiner als 60 ms insbesondere kleiner als 45 ms ist. Diesen Effekt nutzt man auch bei Kinofilmen, wo zwischen den einzelnen Bildern eines Films innerhalb von 40 ms umgeschaltet wird. Innerhalb des gesetzlich vorgegebenen Zeitrahmens von 100 ms bis 200 ms lässt sich somit mittels mehrerer LED-Gruppen somit der Eindruck eines kontinuierlich breiter werdenden Leuchtbereichs erzeugen.

Durch den erzielten Animationseffekt ergibt sich schließlich der Vorteil, dass es einem Betrachter auch in einer verhältnismäßig komplexen Verkehrssituation leichter fällt, die Blinkleuchte im Verkehr auszumachen und die angezeigte Fahrtrichtungsänderung zu erkennen. Indem nicht schlagartig von der passiven in die aktive Phase umgeschaltet wird, sondern ein Übergang von bis zu 200 ms geschaffen wird, wird die Auffälligkeit des Blinklichts für einen menschlichen Betrachter vergrößert. Hierdurch reduziert sich die Blickzuwendungszeit, die ein Mensch benötigt, um den aktiven Blinker zu erkennen. Ein weiterer Vorteil der erfindungsgemäßen Blinkleuchte besteht in der attraktiven Inszenierung, durch welche eine Nachfrage nach einer entsprechenden Blinkleuchte vergrößert werden kann.

Gemäß einer Weiterbildung des erfindungsgemäßen Verfahrens liegt die Zeitdauer, während welcher alle LED-Gruppen gemeinsam im eingeschalteten Zustand gehalten werden, in einem Bereich von 50 ms bis 400 ms, insbesondere im Bereich von 200 ms bis 300 ms. In Kombination mit der Dauer des Animationseffekts kann so eine aktive Phase der Blinkleuchte mit einer Dauer erzeugt werden, die von einem Betrachter auch ohne besondere Anstrengung als eindeutige Fahrtrichtungsänderungsanzeige erkannt wird.

Eine Ausführungsform des erfindungsgemäßen Verfahrens sieht vor, dass sich die Anfangsgruppe an einem Ende der Reihe befindet. Mit anderen Worten, wird die Reihe der LED-Gruppen von einem Ende aus in einem 100 ms bis 200 ms dauernden Wischeffekt zum anderen Ende hin aufgedimmt. Es hat sich gezeigt, dass dieses zeitliche und zugleich örtliche Aufdimmen der Blinkleuchte bei einem menschlichen Betrachter den Eindruck eines Lauflichts erweckt, ohne dass hierzu mehr Zeit benötigt würde, als zum Einschalten einer Glühbirne.

Als besonders zweckmäßig hat es sich erwiesen, wenn die Anfangsgruppe wenigstens acht Leuchtdioden umfasst und entlang einer Erstreckungsrichtung der Reihe von LED-Gruppen wenigstens 4 cm breit ist. Eine Anfangsgruppe mit dieser Ausgestaltung und dieser Abmessung kann eine derart große Leuchtkraft und einen derart breiten Leuchtbereich erzeugen, dass schon mit dem Einschalten der Anfangsgruppe eine deutlich erkennbare Fahrtrichtungsanzeige gegeben ist.

Eine weitere Ausführungsform des erfindungsgemäßen Verfahrens sieht vor, dass als weitere LED-Gruppen jeweils zwei oder mehr, bevorzugt drei, Leuchtdioden gleichzeitig angesteuert werden. Insbesondere werden hierbei weniger als sechs Leuchtdioden angesteuert. Die beschriebene Größe der LED-Gruppen von zwei bis sechs Leuchtdioden erlaubt es, den Schaltungsaufwand zum Bereitstellen einer erfindungsgemäßen Blinkleuchte signifikant zu vereinfachen. Gleichzeitig wird vermieden, dass ein menschlicher Betrachter aus einer Entfernung von 2 m und mehr beim zeitlich versetzten Einschalten der einzelnen LED-Gruppen einen stufenweise länger werdenden Leuchtbereich wahrnimmt. Bei der Verwendung von sechs oder weniger Leuchtdioden pro LED-Gruppe nimmt der Betrachter, wie gewünscht, einen kontinuierlich länger werdenden Leuchtbereich wahr.

Eine weitere Ausführungsform des erfindungsgemäßen Verfahrens sieht vor, dass die nach der Anfangsgruppe eingeschalteten LED-Gruppen beim jeweiligen Einschalten für eine vorbestimmte Zeitdauer mit einer kontinuierlich steigenden elektrischen Leistung versorgt werden. Hierdurch lässt sich der Eindruck eines Aufdimmens bei einem menschlichen Betrachter noch verstärken, ohne dabei die Vorgaben der beschriebenen Norm zu verletzen. Diese Ausführungsform des Verfahrens kann auch auf andere Leuchten mit Leuchtdioden angewandt werden. Entsprechend ist dieses Verfahren als unabhängiger Aspekt der Erfindung zu betrachten, mit dem auch andere Typen von Blinkleuchten, aber auch ein Bremslicht oder ein Hauptscheinwerfer betrieben werden können.

Ein weiterer Aspekt der Erfindung betrifft eine Blinkleuchte für einen Kraftwagen. Die Blinkleuchte weist eine Mehrzahl von in einer Reihe angeordneten Leuchtdioden auf, die wiederum zu einer Mehrzahl von LED-Gruppen miteinander verschaltet sind. Jede dieser LED-Gruppen umfasst dabei wenigstens eine der Leuchtdioden. Bei der Blinkleuchte ist des Weiteren eine Steuereinrichtung dazu ausgelegt, die LED-Gruppen gemäß einer Ausführungsform des erfindungsgemäßen Verfahrens zu schalten.

Zweckmäßigerweise sind bei der erfindungsgemäßen Kraftwagen-Blinkleuchte die Leuchtdioden einer LED-Gruppe entlang Erstreckungsrichtung der Reihe der LED-Gruppen nebeneinander angeordnet. Wird dann eine LED-Gruppe angeschaltet, verbreitert sich der Leuchtbereich in Erstreckungsrichtung der Reihe dann um einen Streckenabschnitt, der durch die Anzahl der in der LED-Gruppe zusammengefassten Leuchtdioden vorgegeben werde kann. Entsprechend wird also beim Einschalten der LED-Gruppen gesteuert, mit welcher Geschwindigkeit sich der Leuchtbereich verbreitert.

Eine Weiterbildung der erfindungsgemäßen Blinkleuchte sieht dabei vor, dass wenigstens zwei LED-Gruppen in Erstreckungsrichtung der Reihe unterschiedlich lang sind. Hierdurch lässt sich der Eindruck erwecken, dass der Leuchtbereich beim Aufdimmen mit einer über der Zeit veränderlichen Geschwindigkeit breiter wird.

Um eine Blinkleuchte bereitstellen zu können, bei welcher der Verschaltungsaufwand besonders gering ist, sieht eine Ausführungsform der erfindungsgemäßen Blinkleuchte vor, dass wenigstens eine LED-Gruppe, bevorzugt jede LED-Gruppe, jeweils zwei oder mehr, bevorzugt drei, Leuchtdioden umfasst.

Von der Erfindung sind auch Weiterbildungen der erfindungsgemäßen Kraftwagen-Blinkleuchte umfasst, welche Merkmale aufweisen, die Merkmalen der Weiterbildungen des erfindungsgemäßen Verfahrens entsprechen. Diese Weiterbildungen sind daher hier nicht noch einmal gesondert beschrieben.

Die Erfindung wird im Folgenden anhand von Ausführungsbeispielen näher erläutert. Dazu zeigt:
- Fig. 1: eine schematische Darstellung einer Blinkleuchte gemäß einer Ausführungsform der erfindungsgemäßen Blinkleuchte;
- Fig. 2: ein Diagramm zu einem Ablauf von Blinkzyklen, wie sie sich gemäß einer Ausführungsform des erfindungsgemäßen Verfahrens bei der Blinkleuchte von Fig. 1 ergeben;
- Fig. 3: ein Diagramm zu einem weiteren Ablauf von Blinkzyklen einer weiteren Ausführungsform der erfindungsgemäßen Blinkleuchte; und
- Fig. 4: ein Diagramm mit zeitlichen Helligkeitsverläufen.

Die Beispiele stellen bevorzugte Ausführungsformen der Erfindung dar.

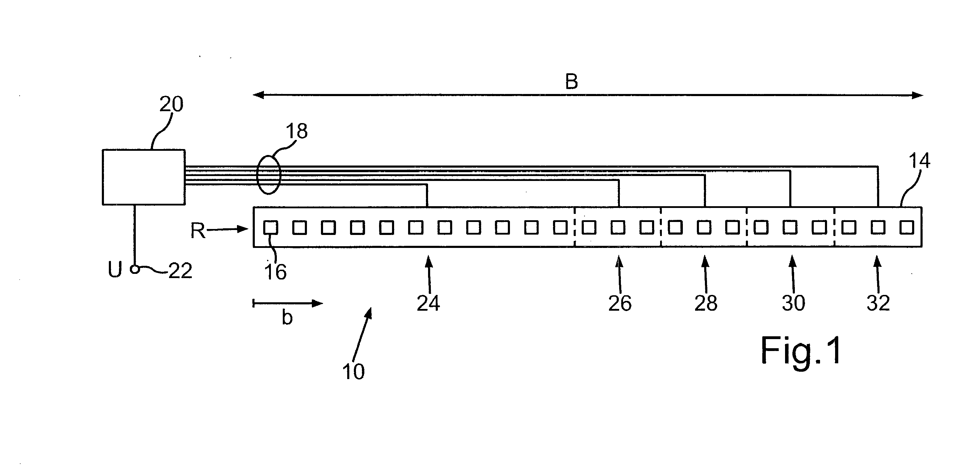

In Fig. 1 ist das Innere einer Blinkleuchte 10 gezeigt. Die Blinkleuchte 10 ist in einer Rückleuchte eines Personenkraftwagens eingebaut. In der Blinkleuchte 10 befindet sich eine Leiterplatine 12 (Printed Circuit Board - PCB) auf welcher insgesamt dreiundzwanzig Leuchtdioden 16 aufgelötet sind. Der Übersichtlichkeit halber ist von den Leuchtdioden 16 in Fig. 1 nur eine Leuchtdiode mit einem Bezugszeichen versehen. Auf der Leiterplatine 14 sind die Leuchtdioden 16 hier in einer geraden Reihe angeordnet. Die Schaltungsplatine 14 befindet sich in der Blinkleuchte 10 hinter einer Orange gefärbten, transparenten Scheibe. Das Licht der Leuchtdioden 16 ist daher von außen für einen Betrachter als orangenes Licht erkennbar. Anstelle einer einzelnen Schaltungsplatine 14 kann auch vorgesehen sein, die Leuchtdioden auf mehreren Schaltungsplatinen verteilt anzuordnen.

Die Leiterplatte 14 ist über Leitungen 18 mit einer Steuereinheit 20 verbunden. Über einen Steuereingang 22 empfängt die Steuereinheit 20 ein Spannungssignal, welches ein Steuersignal U für die Blinkleuchte 10 darstellt. Das Steuersignal U wird von einem (nicht dargestellten) Steuergerät des Kraftwagens erzeugt. Bei der Steuereinheit 20 kann es sich beispielsweise um einen Mikrocontroller oder einen Signalprozessor handeln. Anstelle der Steuereinheit 20 kann auch vorgesehen sein, die Leitungen 18 direkt an das Steuergerät anzuschließen.

Bei der Schaltungsplatine 14 sind (nicht dargestellte) Leiterbahnen vorgesehen, durch welche die Leuchtdioden 16 für deren Betrieb mit einer (nicht dargestellten) Spannungsquelle verbunden sind. Ein Stromfluss von der Spannungsquelle zu den Leuchtdioden 16 kann durch Schalter unterbrochen werden, die jeweils über eine der Leitungen 18 von der Steuereinheit 20 geschaltet werden können. Die Leiterbahnen der Schaltungsplatine 14 sind dabei derart angeordnet, dass jeweils mehrere Leuchtdioden 16 zu einer Gruppe 24, 26, 28, 30, 32 verschaltet sind. Die Gruppe 24 umfasst dabei 11 Leuchtdioden 16, die Gruppen 26 bis 32 jeweils drei Leuchtdioden 16.

Die Leuchtdioden 16 können äquidistant auf der Schaltungsplatine 14 angeordnet sein. Eine Gesamtbreite B der Reihe R aus den LED-Gruppen 24 bis 32 beträgt dabei 50 cm. Die Breite kann bei anderen Ausführungsformen der Leuchtdiode zwischen 40 und 60 cm betragen.

Die Leuchtdioden 16 innerhalb einer Gruppe 24 bis 32 sind durch die Leiterbahnen der Schaltungsplatine 14 derart miteinander verschaltet, dass durch Schalten eines der Gruppe 24 bis 32 zugeordneten Schalters über eine der Leitungen 18 die Leuchtdioden 16 dieser Gruppe 24 bis 32 gleichzeitig geschaltet werden.

In dem der Fig. 1 zugrunde liegenden Beispiel betätige eine Person in dem Kraftwagen den Fahrtrichtungsanzeiger. Daraufhin wird von dem Steuergerät an dem Steuereingang 22 der Steuereinheit 20 eine Rechteckspannung als Steuersignal U erzeugt. Eine Periodendauer der Rechteckspannung entspricht der Blinkfrequenz, mit welcher die Blinkleuchte 10 zum Anzeigen der Fahrtrichtung blinken soll.

Die Leuchtdioden 16 werden auf die steigenden Flanken der einzelnen Recheckpulse des Steuersignals U hin von der Steuereinheit 20 über die Leitungen 18 nicht gleichzeitig angeschaltet. Stattdessen wird zunächst die Gruppe 24 als Anfangsgruppe eingeschaltet und anschließend nacheinander der Reihe R nach die Gruppe 26, 28, 30 und schließlich die Gruppe 32. Mit einer fallenden Flanke des Rechtecksignals des Steuersignals U werden dann sämtliche Gruppen 24 bis 32, d.h. alle Leuchtdioden 16, wieder ausgeschaltet. Dieser Blinkzyklus wiederholt sich dann mit der nächsten steigenden Flanke des Rechtecksignals.

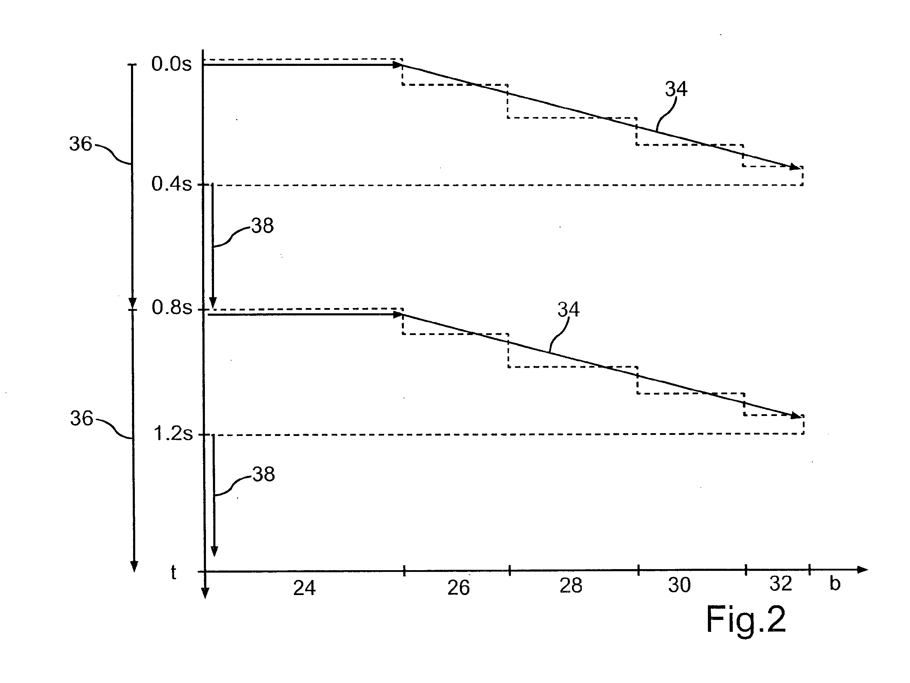

In Fig. 2 ist dazu ein Ablaufdiagramm zweier aufeinanderfolgenden Blinkzyklen gezeigt. Auf einer horizontalen Achse des Diagramms von Fig. 2 ist dazu gezeigt, welcher Streckenabschnitt b der Schaltungsplatine 14 für einen Betrachter der Blinkleuchte 10 durch die orangene Scheibe hindurch zu einem bestimmten Zeitpunkt t als erleuchtet erscheint, d.h. die Breite des Leuchtbereichs.

Der Übergang vom Einschalten der Gruppe 24 als Anfangsgruppe bis zum Betrieb sämtlicher Leuchtdioden 16 nach dem Zuschalten der Gruppen 26 bis 32 dauert 150 ms. Er kann allgemein zwischen 100 und 200 ms betragen. Diese Aufdimmphase 34 der Blinkleuchte 10 ist damit derart kurz, dass der Betrachter der Blinkleuchte 10 den Eindruck erhält, dass die Blinkleuchte 10 ähnlich wie eine mit Glühbirnen betriebene Blinkleuchte kontinuierlich heller wird. Bei der Blinkleuchte 10 erhält der Betrachter dabei aber zusätzlich den Eindruck, dass der Streckenabschnitt b der zugleich beleuchteten Leuchtdioden 16 in einer fließenden Bewegung gleichmäßig breiter wird. In dem Beispiel von Fig. 1 bekommt der Betrachter dadurch somit den Eindruck, dass die Blinkleuchte 10 ähnlich wie ein Lauflicht nach rechts hinten breiter wird und hierdurch noch einmal die Richtungsanzeige betont wird.

Insgesamt weist die aktive Phase oder Leuchtphase der Blinkleuchte 10 innerhalb eines Blinkzyklus 36 eine Dauer von 0,4 Sekunden auf. Daran schließt sich jeweils eine inaktive Phase oder Aus-Phase 38 an, die in diesem Beispiel ebenfalls 0,4 Sekunden dauert.

Indem die Leuchtdioden 16 bei der Blinkleuchte 10 äquidistant angeordnet sind und jede der Gruppen 26 bis 32 jeweils drei Leuchtdioden umfasst, ergibt sich bei gleichen Zeitabständen zwischen dem Einschalten jeweils zweier benachbarter Gruppen 26 bis 28 in der Aufdimmphase 34 für den Betrachter der Eindruck einer gleichbleibenden Geschwindigkeit, mit welcher die Reihe der bereits leuchtenden Leuchtdioden 16 breiter wird, d. h. mit welcher der beleuchtete Abschnitt b breiter wird.

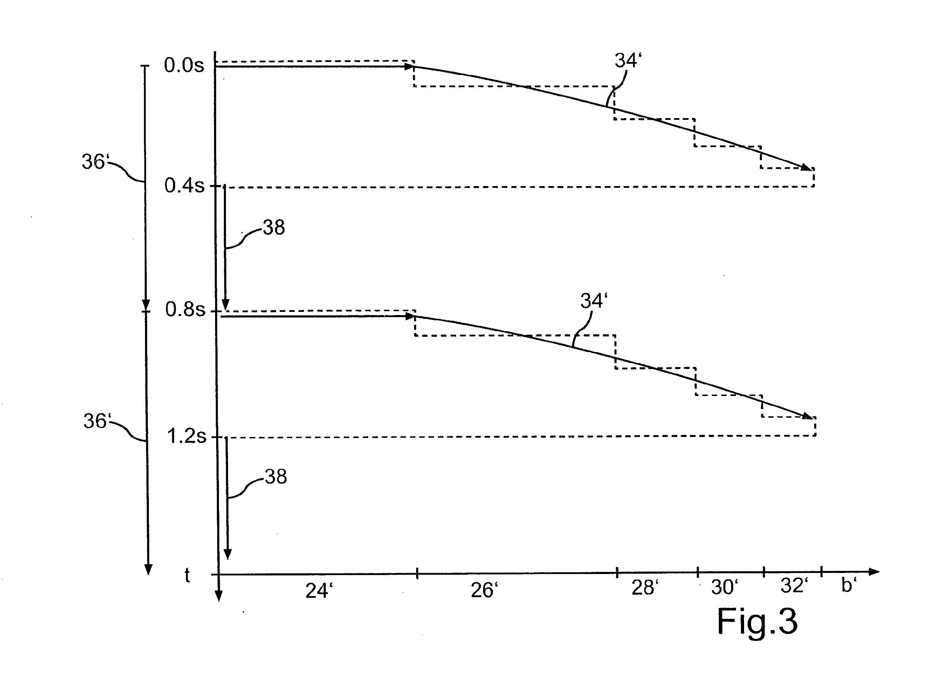

Indem jeweils unterschiedlich viele Leuchtdioden in den Gruppen 26 bis 32 zusammengefasst werden, oder die Abstände der Leuchtdioden zueinander variiert sind, kann dagegen erreicht werden, dass die Breite des beleuchten Abschnitts b innerhalb eines Blinkzyklus mit veränderlicher Geschwindigkeit zunimmt. Hierzu ist in Fig. 3 ein Ablaufdiagramm gezeigt, welches demjenigen von Fig. 2 ähnelt. Das Diagramm von Fig. 3 zeigt für Blinkzyklen 36' eine Aufdimmphase 34', bei welcher eine Breite eines beleuchteten Abschnitts b' mit einer Geschwindigkeit wächst, die kleiner wird, je mehr Leuchtdioden bereits in Betrieb sind. Die über der Zeit t variierende Geschwindigkeit, mit welcher die Breite des beleuchteten Abschnitts b' während der Aufdimmphase 34' zunimmt, wird durch Gruppen 24' bis 32' von Leuchtdioden erreicht, die jeweils unterschiedlich viele Leuchtdioden umfassen. Die zu Beginn eines jeden Blinkzyklus 36' eingeschaltete Gruppe 24' bildet eine Anfangsgruppe. Sie kann hier 8 bis 12 Leuchtdioden umfassen. Die benachbarte Gruppe 26' kann zwischen 6 und 10 Leuchtdioden umfassen. Die Gruppe 28' umfasst wiederum weniger Leuchtdioden als die Gruppe 26'. Genauso ist die Anzahl der Leuchtdioden 30' kleiner als diejenigen der Gruppe 28'. Die Gruppe 32' umfasst schließlich die geringste Anzahl an Leuchtdioden. Da die Aufdimmphase 34' wieder weniger als 200 ms dauert, empfindet der Betrachter auch bei dieser Anordnung das Aufdimmen der Blinkleuchte als kontinuierlichen Vorgang.

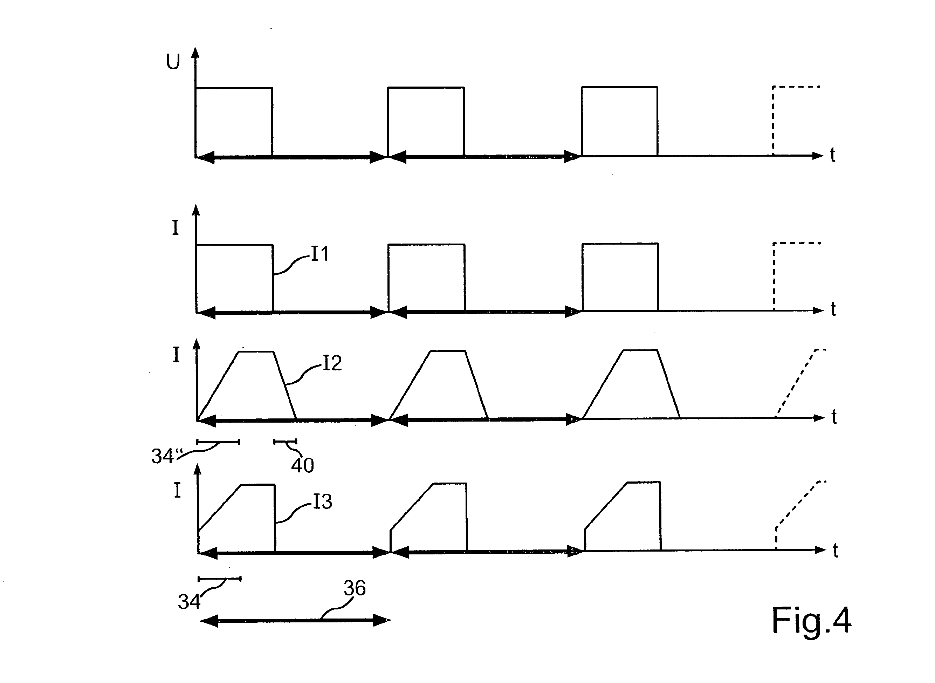

In Fig. 4 ist ein Diagramm gezeigt, in welchem Verläufe einer Leuchtintensität l über der Zeit t für Blinkleuchten unterschiedlicher Technologien gezeigt sind. Die Wert für die Leuchtintensitäten l ergeben sich dabei als zu einem bestimmten Zeitpunkt t gebildete Summe der abgestrahlten Leuchtleistung. Die Leuchtleistung wurde dabei über die gesamte Lichtaustrittsfläche der jeweiligen Blinkleuchte ermittelt.

Zu den einzelnen Verläufen der Leuchtintensität l ist im obersten Graphen von Fig. 4 ein Verlauf des Steuersignals U gezeigt, mit dem die Blinkleuchten angesteuert wurden. Der Verlauf kann beispielsweise auch am Ansteuereingang 22 der Steuereinheit 20 durch das Steuergerät eines Kraftwagens erzeugt worden sein. Das Ansteuersignal U ist ein Rechteckpuls-Signal mit einer Periodendauer, die von 0,5 bis 1 Sekunde betragen kann. Daraus ergeben sich entsprechende Blinkzyklen 36".

Zu dem Steuersignal U ist ein Intensitätsverlauf l1 gezeigt, wie er sich bei einer herkömmlichen Blinkleuchte ergibt, die Leuchtdioden als Leuchtmittel aufweist. Die Leuchtdioden werden hier entsprechend dem Steuersignal U geschaltet. Ein Intensitätsverlauf l2 ergibt sich dagegen bei einer Blinkleuchte mit Glühlampen als Leuchtmitteln. Wie bereits beschrieben, benötigen Glühlampen bis zu 200 ms, um nach dem Einschalten ihre volle Helligkeit zu erreichen. Der Intensitätsverlauf l3 ergibt sich bei Verwendung der Blinkleuchte 10, bei welcher Leuchtdioden verwendet werden, die in Gruppen nacheinander eingeschaltet werden.

Der Intensitätsverlauf l1 folgt unmittelbar dem Ansteuersignal U. Die Leuchtdioden erreichen ihre maximale Helligkeit innerhalb von weniger als 1 ms nach einer jeweiligen ansteigenden Flanke des Steuersignals U innerhalb eines Blinkzyklus 36". Bei dem Intensitätsverlauf l2 ergibt sich dagegen ein rampenförmiger Anstieg nach jeder ansteigenden Flanke des Ansteuersignals U. Diese nicht beeinflussbare Aufdimmphase 34" der Glühlampen dauert zwischen 100 und 200 ms. Nach einer abfallenden Flanke des Ansteuersignals U nimmt der Intensitätsverlauf l2 von seinem Maximalwert innerhalb einer Abdimmphase 40 von ungefähr 100 ms einen fallenden Verlauf an.

Bei dem Intensitätsverlauf l3 entspricht die Zeitdauer der Aufdimmphase 34 derjenigen einer Glühlampe, d. h. derjenigen der Aufdimmphase 34". Der Wert der maximalen Leuchtintensität wird bei dem Intensitätsverlauf l3 genauso lang beibehalten, wie bei dem Intensitätsverlauf l2. Somit ergibt sich bei der Blinkleuchte 10 in Bezug auf die Dauer und die Klarheit des Signals für die Fahrtrichtungsanzeige kein Unterschied zu einer Blinkleuchte mit einer Glühlampe. Zusätzlich wird jedoch in der Aufdimmphase 34 durch das gesteuerte Verbreitern des Streckenabschnitts b der leuchtenden Leuchtdioden 16 dem Betrachter eine Richtungsinformation vermittelt. Die bevorstehende Änderung der Fahrtrichtung wird damit für den Betrachter intuitiv erkennbar gemacht.

Insgesamt ist durch die Beispiele gezeigt, wie sich bei einem Blinker die Lichtelemente zeitversetzt ansteuern lassen und hierbei ausgehend von der Ansteuerung zumindest eines Lichtelements weitere Lichtelemente in zeitlich enger Folge derart eingeschaltet werden, dass sich für den Betrachter ein Auffüllen des Lichtkörpers ergibt. Alternativ dazu kann zumindest ein erstes Lichtelement mit gegenüber den übrigen Lichtelementen höherer Energie angesteuert und die weiteren Lichtelemente nachfolgend kontinuierlich steigend mit Energie versorgt werden. Hierbei ergibt sich dann ebenfalls der Eindruck eines sich auffüllenden Lichtes. Die hier am Beispiel eines Blinkers gezeigte erfindungsgemäße Betriebsweise kann auch für Bremslichter und Hauptscheinwerfer verwendet werden.

## Patentansprüche

1. Verfahren zum Betreiben einer Blinkleuchte (10), bei welcher eine Mehrzahl von jeweils wenigstens eine Leuchtdiode (16) umfassenden LED-Gruppen (24 bis 32) in einer Reihe (R) angeordnet ist, wobei in einem Blinkzyklus (36, 36') ausgehend von einem ausgeschalteten Zustand (38) aller LED-Gruppen (24 bis 32) zunächst eine Anfangsgruppe (24) eingeschaltet wird, danach ausgehend von der Anfangsgruppe (24) der Reihe (R) nach die übrigen LED-Gruppen (26 bis 32) nacheinander hinzugeschaltet werden, bis sämtliche LED-Gruppen (24 bis 32) eingeschaltet sind, anschließend sämtliche LED-Gruppen (24 bis 32) für eine vorgegebene Zeitdauer im eingeschalteten Zustand gehalten werden und schließlich alle LED-Gruppen (24 bis 32) wieder ausgeschaltet werden und hierbei eine Zeitdauer (34, 34') vom Aktivieren der Anfangsgruppe (24) bis zum Erreichen des aktiven Zustands aller LED-Gruppen (24 bis 32) in einem Bereich von 100 ms bis 200 ms, insbesondere in einem Bereich von 140 ms bis 160 ms, liegt.

2. Verfahren nach Anspruch 1, wobei die Zeitdauer, während welcher alle LED-Gruppen (24 bis 32) gemeinsam im eingeschalteten Zustand gehalten werden, in einem Bereich von 50 ms bis 400 ms, insbesondere im Bereich von 200 ms bis 300 ms, liegt.

3. Verfahren nach Anspruch 1 oder 2, wobei sich die Anfangsgruppe (24) an einem Ende der Reihe (R) befindet.

4. Verfahren nach einem der vorhergehenden Ansprüche, wobei die Anfangsgruppe (24) wenigstens acht Leuchtdioden umfasst und entlang einer Erstreckungsrichtung der Reihe (R) wenigstens 4 cm breit ist.

5. Verfahren nach einem der vorhergehenden Ansprüche, wobei als übrige LED-Gruppen (24 bis 32) jeweils zwei oder mehr, bevorzugt drei, Leuchtdioden (16) gleichzeitig angesteuert werden.

6. Verfahren, insbesondere nach einem der vorhergehenden Ansprüche, wobei die nach der Anfangsgruppe eingeschalteten LED-Gruppen (26 bis 32) beim jeweiligen Einschalten für eine vorbestimmte Zeitdauer mit einer kontinuierlich steigenden elektrischen Leistung versorgt werden.

7. Kraftwagen-Blinkleuchte (10) mit einer Mehrzahl von in einer Reihe (R) angeordneten Leuchtdioden (16), die zu einer Mehrzahl von LED-Gruppen miteinander verschaltet sind, von denen jede wenigstens eine der Leuchtdioden (16) umfasst, sowie mit einer Steuereinrichtung (20), welche dazu ausgelegt ist, die LED-Gruppen (24 bis 32) gemäß einem Verfahren nach einem der vorhergehenden Ansprüche zu schalten.

8. Kraftwagen-Blinkleuchte (10) nach Anspruch 7, wobei die Leuchtdioden (16) wenigstens einer LED-Gruppe (24 bis 32) in Erstreckungsrichtung der Reihe (R) nebeneinander angeordnet sind.

9. Kraftwagen-Blinkleuchte (10) nach Anspruch 7 oder 8, wobei wenigstens zwei LED-Gruppen (24 bis 32) in Erstreckungsrichtung der Reihe (R) unterschiedlich lang sind.

10. Kraftwagen-Blinkleuchte (10) nach einem der Ansprüche 7 bis 9, wobei wenigstens eine LED-Gruppe (24 bis 32), bevorzugt jede LED-Gruppe (24 bis 32), jeweils zwei oder mehr, bevorzugt drei, Leuchtdioden (16) umfasst.
